# FASCICULE DE BREVET EUROPEEN

(11) **EP 3 544 039 B1**
(45) Date de publication et mention de la délivrance du brevet: **02.06.2021**
(21) Numéro de dépôt: 19164285.9
(22) Date de dépôt: 21.03.2019
(51) Int. Cl.: H01H 9/28, H01H 27/00, H01H 47/00, H01R 13/703, G06F 21/10, H01H 9/20

(54) **PROCÉDÉ DE CONSIGNATION D'UNE FONCTION D'UN APPAREIL ÉLECTRIQUE ET APPAREIL ÉLECTRIQUE METTANT EN OEUVRE CE PROCÉDÉ**
VERFAHREN ZUR VERRIEGELUNG EINER FUNKTION EINER ELEKTRISCHEN VORRICHTUNG UND EINE ELEKTRISCHE VORRICHTUNG ZUR IMPLEMENTIERUNG DES VERFAHRENS
A METHOD FOR LOCKING A FUNCTION OF AN ELECTRICAL APPARATUS, AND AN ELECTRICAL APPARATUS IMPLEMENTING THIS METHOD

(30) Priorité: 22.03.2018 FR 1852477
(43) Date de publication de la demande: 25.09.2019
(73) Titulaire: Schneider Electric Industries SAS, 92500 Rueil Malmaison (FR)
(72) Inventeur: BOHRER, Roland, 38050 Grenoble Cedex 09 (FR); ROBICHON, Christophe, 38050 Grenoble Cedex 09 (FR)
(74) Mandataire: Lavoix

(56) Documents cités:
- US-A1- 2015 168 487
- US-A1- 2016 225 562
- US-A1- 2018 068 095
- US-B1- 6 477 021

## Description

La présente invention concerne un procédé de consignation d'une fonction d'un appareil électrique. L'invention concerne également un appareil électrique mettant en œuvre ce procédé.

L'invention s'applique plus généralement au domaine des appareils électriques utilisés dans des installations électriques, notamment des appareils de protection électrique, des appareils de mesure électrique ou des appareils de commutation électrique, et plus particulièrement des appareils de coupure d'un courant électrique tels que des disjoncteurs, des contacteurs ou des sectionneurs.

Un tel appareil électrique peut être consigné temporairement par un ou plusieurs utilisateurs lors d'une opération de maintenance, au cours de laquelle ce ou ces utilisateurs doivent intervenir sur une partie de l'appareil ou sur une installation électrique associée à cet appareil. Lorsqu'une fonction de l'appareil est consignée, c'est-à-dire verrouillée, aucun autre utilisateur ne peut interférer avec cette fonction. Cela permet à l'utilisateur d'intervenir en toute sécurité sans être gêné par un déverrouillage ou un usage inopiné de cette fonction par un autre utilisateur. Ainsi, la consignation permet d'assurer la sécurité des installations et des utilisateurs et de garantir que seule la personne ayant consigné l'appareil peut lever cette consignation.

A titre d'exemple illustratif et non limitatif, dans le cas d'un disjoncteur installé en amont d'une installation électrique, l'utilisateur ouvre le disjoncteur pour interrompre l'alimentation électrique puis consigne le disjoncteur pour éviter qu'un autre utilisateur ne puisse ensuite refermer le disjoncteur et réalimenter électriquement l'installation pendant qu'il intervient sur l'installation.

Typiquement, la consignation est assurée par des moyens de verrouillage mécaniques, tels que des cadenas ou des verrous, qui servent à bloquer un organe de commande dans une position prédéfinie. Dans d'autres cas, les moyens de verrouillage visent à empêcher l'accès des autres utilisateurs à cet organe de commande.

L'utilisation de moyens de verrouillage mécaniques présente cependant de nombreux inconvénients. Elle nécessite un accès physique direct à l'appareil électrique, ce qui est parfois difficile à assurer lorsque l'appareil est placé dans un milieu confiné ou à un emplacement peu accessible. Elle est compliquée à mettre en place lorsque plusieurs utilisateurs sont amenés à intervenir sur un même appareil. Elle est également difficile à implémenter dans des installations de taille importante, où l'utilisateur est amené à consigner plusieurs appareils pouvant être distant les uns des autres. Les moyens de verrouillage peuvent être forcés par un utilisateur non autorisé ou sectionnés au moyen d'un outil de découpe et donc conduire à une levée non autorisée de la consignation.

Le document US 2018/068095 A1 divulgue un appareil de télécommunications, tel qu'un appareil de transmission pour fibre optique. Des fonctionnalités de l'appareil peuvent être activées ou désactivées à distance par un utilisateur. Ce dernier peut être identifié au moyen d'une clé d'authentification.

C'est à ces inconvénients qu'entend plus particulièrement remédier l'invention, en proposant un appareil électrique, et un procédé associé, dans lequel une fonctionnalité de l'appareil peut être consignée de façon améliorée.

A cet effet, l'invention concerne un procédé conforme à la revendication 1.

Grâce à l'invention, la consignation de la fonction est effectuée de façon dématérialisée à l'aide d'une clé numérique et d'un verrouillage logique assuré par l'unité de commande électronique de l'appareil électrique. L'utilisation de moyens de verrouillage mécaniques n'est donc plus nécessairement requise.

Selon un autre aspect, l'invention concerne un procédé conforme à la revendication 2.

Selon des aspects avantageux mais non obligatoires de l'invention, un tel procédé peut incorporer une ou plusieurs des caractéristiques de l'une quelconque des revendications 3 à 8.

Selon un autre aspect, l'invention concerne un appareil conforme à la revendication 9.

L'invention sera mieux comprise et d'autres avantages de celle-ci apparaîtront plus clairement à la lumière de la description qui va suivre, d'un mode de réalisation d'un appareil électrique donnée uniquement à titre d'exemple et faite en référence aux dessins annexés dans lesquels :
- la figure 1 est une représentation schématique d'un appareil électrique conforme à l'invention ;
- la figure 2 est un ordinogramme d'un procédé de consignation d'une fonction de l'appareil électrique de la figure 1 ;
- la figure 3 est un ordinogramme d'un procédé de libération d'une fonction de l'appareil électrique de la figure 1, cette fonction ayant été préalablement consignée au moyen du procédé de la figure 2 ;
- la figure 4 est un ordinogramme d'un procédé de consignation partielle d'une fonction de l'appareil électrique de la figure 1.

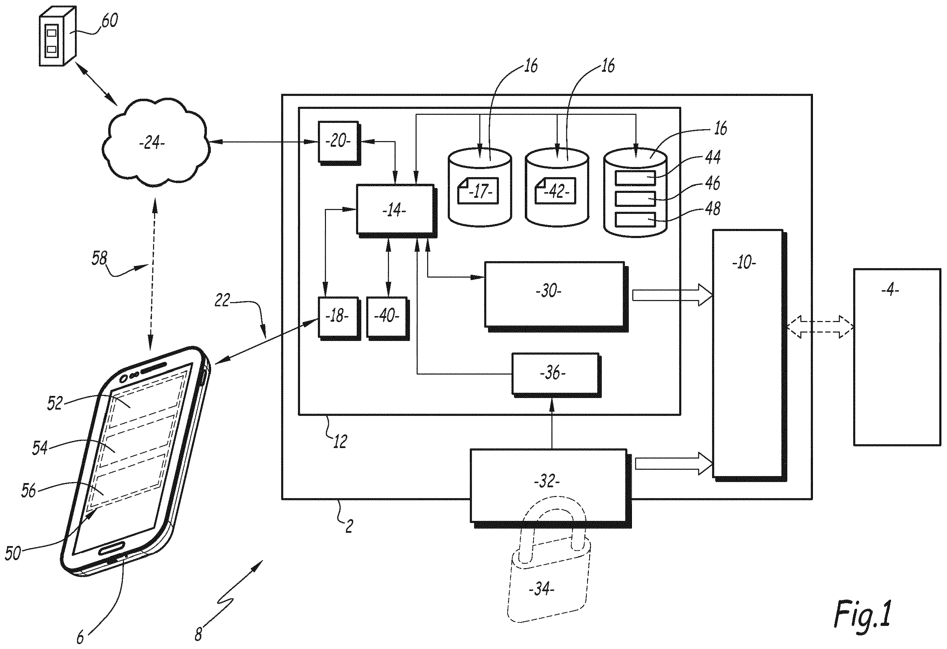

La figure 1 représente un exemple d'un appareil électrique 2 associé à une installation électrique 4. Par exemple, l'installation 4 est une installation de distribution d'électricité destinée à alimenter électriquement un ou plusieurs appareils de puissance, ici dans un milieu industriel ou domestique. Dans cet exemple, l'appareil électrique 2 est raccordé à l'installation 4 pour piloter, superviser ou protéger tout ou partie de l'installation 4.

Selon différents modes de réalisation, l'appareil électrique 2 est un est un appareil de protection électrique, ou un appareil de mesure électrique, ou un appareil de commutation électrique, notamment un appareil de coupure électrique. Il peut également s'agir d'un appareil de supervision ou un appareil de communication tel qu'un commutateur réseau ou un appareil du type « automatic transfer switch ».

Dans cet exemple illustratif, l'appareil 2 est un disjoncteur ou un contacteur ou un sectionneur adapté pour interrompre l'alimentation électrique de l'installation 4 en cas de détection d'un défaut électrique ou en réponse à une commande d'un utilisateur.

La figure 1 représente également un terminal client 6 électronique qui forme avec l'appareil 2 un système 8 et dont le rôle est décrit plus en détail dans ce qui suit.

L'appareil 2 comporte au moins un sous-ensemble 10 qui implémente une fonction de l'appareil 2. Par exemple, le sous-ensemble 10 comporte un ou plusieurs dispositifs électromécaniques, ou électriques, ou magnéto-électriques, ou électroniques, ou tout autre dispositif équivalent. Dans ce qui suit, la référence « 10 » est utilisée pour désigner la fonction implémentée par le sous-ensemble 10. La fonction 10 dépend de la nature de l'appareil 2 et, de préférence, est liée à l'installation 4. Selon les cas, il peut s'agir d'une fonction de protection électrique de l'installation 4, ou une fonction de coupure d'un courant électrique, ou encore une fonction de mesure d'une ou de plusieurs grandeurs électriques. La fonction 10 est apte à être commandée par un utilisateur de l'appareil 2.

Par exemple, dans le cas d'un disjoncteur ou d'un contacteur, le sous-ensemble 10 est un organe de coupure d'un courant électrique connecté en amont de l'installation 4, de manière à permettre l'interruption de l'alimentation électrique de l'installation 4. La fonction associée à ce sous-ensemble 10 correspond à la commutation de l'organe de coupure entre des états électriquement ouvert et fermé.

La fonction assurée par le sous-ensemble 10 est adaptée pour être consignée par un utilisateur. Une fonction est ici dite « consignée » par un utilisateur lorsqu'elle est placée par cet utilisateur dans un état spécifique, ou dans une configuration spécifique, et que d'autres utilisateurs sont empêchés de modifier l'état ou la configuration du sous ensemble 10. De façon équivalente, cette fonction est alors dite «verrouillée» ou « engagée ». Les autres utilisateurs ne peuvent pas modifier cette fonction tant qu'elle n'a pas été « libérée », ou, en d'autres termes, « déverrouillée » ou « désengagée », par l'utilisateur qui a mis en place la consignation.

Dans le cas illustratif d'un disjoncteur pour lequel le sous-ensemble 10 est un organe de coupure, alors la consignation de la fonction 10 revient à bloquer l'organe de coupure dans un de ses états, de préférence l'état ouvert, de manière à empêcher d'autres utilisateurs de le commuter vers un autre état.

Selon un autre exemple illustratif, le sous-ensemble 10 est un déclencheur d'un appareil de coupure d'un courant électrique. Ce déclencheur est paramétré par une courbe de déclenchement qui définit la réponse du déclencheur en fonction de la valeur mesurée d'une grandeur électrique, telle que la valeur du courant électrique. La consignation de la fonction correspondante consiste alors à sélectionner une courbe de déclenchement spécifique différente de la courbe de déclenchement utilisée pendant le fonctionnement nominal de l'appareil. Cette courbe de déclenchement spécifique, parfois connue sous le nom de « Energy Réduction Maintenance Setting » en langue anglaise, est par exemple définie pour limiter les risques au voisinage du disjoncteur lors du déclenchement de celui-ci par l'occurrence d'un défaut électrique lorsqu'un utilisateur est en train d'intervenir sur l'installation 4.

Dans la description qui suit, un seul sous-ensemble 10 est décrit par souci de simplicité, mais, en pratique, selon d'autres modes de réalisation, l'appareil 2 peut comporter plusieurs sous-ensembles 10 assurant plusieurs fonctions différentes. On comprend donc que la description qui est faite de ce sous-ensemble 10 est transposable à ces autres modes de réalisation.

L'appareil 2 comporte également une unité de commande 12 électronique embarquée. L'unité 12 est destinée à piloter le fonctionnement de l'appareil 2.

En particulier, l'unité 12 est adaptée pour interagir avec le sous-ensemble 10, notamment pour autoriser un pilotage et une supervision à distance de la fonction correspondante. La fonction 10 peut ainsi être pilotée par l'intermédiaire de l'unité 12, à distance par exemple grâce au terminal 6, ou localement depuis un panneau de commande installé en façade de l'appareil 2 et connecté à l'unité 12. L'unité 12 permet aussi de superviser la consignation de la fonction 10, comme expliqué ci-après.

L'unité 12 comporte une unité logique de calcul 14, telle qu'un microprocesseur ou un microcontrôleur, une mémoire informatique 16, une interface de communication 18 à courte portée et une interface réseau 20.

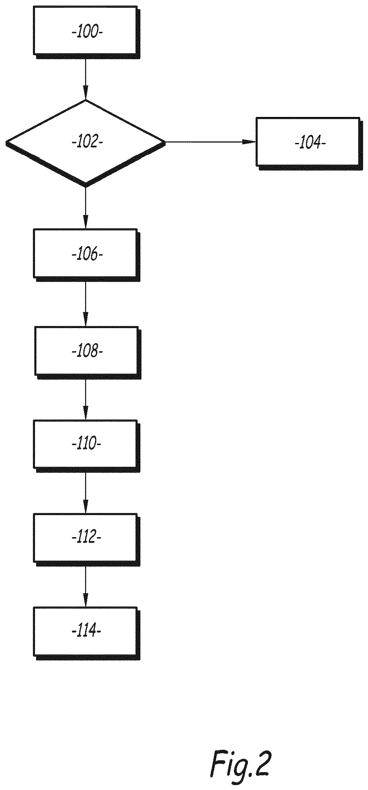

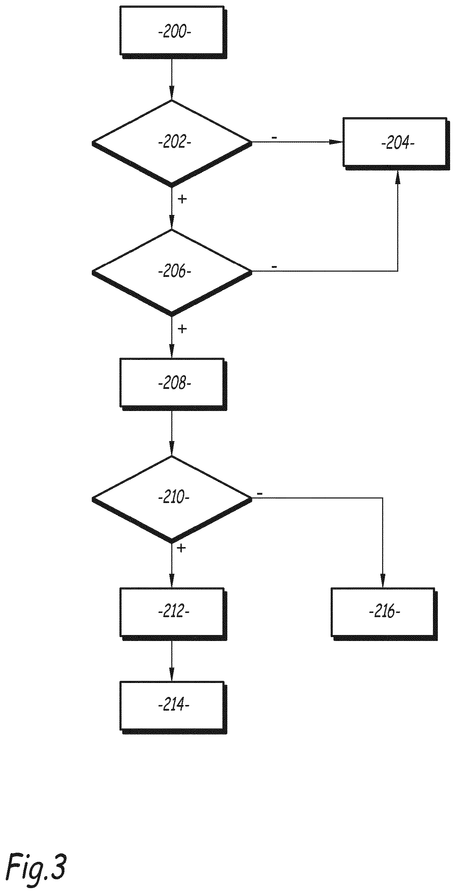

La mémoire 16 comporte de préférence un ou plusieurs modules de mémoire non volatile, par exemple de technologie Flash ou EEPROM ou toute autre technologie de stockage équivalente. La mémoire 16 comporte notamment des instructions exécutables 17, telles que du code machine exécutable par l'unité 14 et/ou des instructions interprétables par un interpréteur exécuté par l'unité 14, permettant notamment la mise en œuvre des procédés de consignation et de libération des figures 2 et 3.

L'interface 18 est adaptée pour établir une liaison d'échange de données 22 à courte portée, par exemple avec le terminal client 6. Par exemple, la liaison de données 22 à courte portée est une liaison filaire ou une liaison sans fil point à point dont la portée est inférieure ou égale à cinq mètres. A titre d'exemple illustratif, il s'agit d'une liaison sans fil de type « Bluetooth® Low Energy ». En variante, il s'agit d'une liaison câblée, par exemple de type USB.

L'interface réseau 20 permet d'établir une liaison de communication avec un réseau informatique distant 24, tel que le réseau internet. La liaison de communication peut être filaire, par exemple de type Ethernet, ou sans fil, par exemple de type WiFi.

L'appareil 12 comporte également un module de verrouillage numérique 30 adapté pour consigner la fonction implémentée par le sous-ensemble 10. Le module 30 est ici implémenté par l'unité 12, par exemple de façon logicielle grâce à des instructions spécifiques implémentées par l'unité 14, ou grâce à un circuit électronique dédié de l'unité 12. Dans ce qui suit, la consignation mise en œuvre par le module de verrouillage 30 est nommée « consignation électronique ».

Par exemple, lorsque la fonction 10 est consignée au moyen du module 30, celui-ci empêche de commander la fonction 10 depuis l'unité 12, que ce soit par l'intermédiaire d'un terminal client 6 connecté à l'unité 12 ou par l'intermédiaire d'un tableau de commande en façade de l'appareil 2 ou au travers de l'interface réseau 20.

Selon des modes de réalisation optionnels, l'appareil 2 est configuré de sorte que la fonction 10 peut être consignée mécaniquement indépendamment de la consignation électronique assurée grâce au module 30. A cet effet, l'appareil 2 comporte une interface de verrouillage mécanique 32 destinée à recevoir un organe de verrouillage mécanique 34, tel qu'un cadenas ou un verrou. Dans ce cas, l'unité 12 comporte avantageusement un système de mesure 36, incluant par exemple un capteur mécanique de position, qui détecte l'état de l'interface 32 et qui génère un signal d'état correspondant, permettant de déduire la présence ou non d'un organe de verrouillage mécanique 34.

A titre d'exemple, l'interface 32 comporte un dispositif mécanique destiné à être associé avec un organe de commande situé en façade de l'appareil 2 agissant sur la fonction 10, tel qu'un levier ou un bouton rotatif ou poussoir ou un clavier. Ce dispositif mécanique est configuré pour empêcher l'actionnement de cet organe de commande par tout utilisateur tant que l'interface 32 est verrouillée par l'organe 34.

En pratique, l'interface 32 peut être posée de façon amovible sur l'appareil 2 en étant destinée à n'être posée que lorsqu'un organe 34 est sur le point d'être posé puis verrouillé, puis à être retirée dès que la présence de l'organe 34 n'est plus requise. Le système de mesure 36 détecte donc la présence ou, alternativement, l'absence, de l'interface 32. Ainsi, même si le système 36 ne mesure pas nécessairement l'état de l'organe de verrouillage 34, l'information qu'il donne sur la présence ou l'absence de l'interface 32 permet d'extrapoler l'état de l'organe 34 et donc de déterminer indirectement si la fonction 10 est consignée mécaniquement ou non.

Selon d'autres variantes, l'organe 34 et l'interface 32 sont intégrées à l'appareil et le système 36 mesure directement l'état verrouillé ou déverrouillé de l'interface 32.

L'interface 32 permet d'offrir à l'utilisateur la possibilité de conserver un verrouillage mécanique indépendant des fonctions de consignation numériques, tout en permettant à celles-ci de fonctionner en ayant connaissance de l'état de la consignation mécanique.

En variante, l'appareil 2 n'est pas apte à être verrouillé mécaniquement. Alors l'interface 32 et le système 36 sont omis, de même que l'organe 34.

Selon des modes de mise en œuvre préférés, la consignation électronique est assurée grâce à une clé numérique 46 générée par l'unité 12. Plus précisément, l'unité 12 comporte un module de génération 40 pour générer une clé numérique unique lorsqu'un terminal client 6 requiert la consignation de la fonction 10. Cette clé est associée à ce terminal client, par exemple en comportant un identifiant unique. L'unité 12 est programmée pour maintenir la fonction 10 consignée tant qu'au moins une telle clé numérique est active, ici grâce au module de verrouillage 30. L'unité 12 comprend également un indicateur d'état 44 qui indique l'état consigné ou non de la fonction 10, ainsi qu'une table 48 dans lequel sont listées les clés numériques 46 actives, c'est-à-dire les clés générées pour lesquelles une consignation de la fonction 10 est active.

Par exemple, l'unité 40 est implémentée de façon logicielle par l'unité 12. En variante, l'unité 40 est un circuit électronique, par exemple un module cryptographique. L'unité 40 génère l'identifiant unique au moyen d'une fonction de génération prédéfinie qui à partir de données qui sont fournies en entrée de la fonction de génération.

Dans certains modes de réalisation, l'identifiant unique est au moins en partie généré à partir d'informations échangées avec le terminal client 6 ayant requis la consignation de la fonction 10, telles qu'un identifiant de connexion de l'utilisateur ayant requis la consignation ou encore d'informations relatives au terminal 6, telles qu'une adresse réseau ou une adresse physique du terminal 6, notamment une adresse MAC (« Media Access Control » en anglais).

Par exemple, l'identifiant unique est en outre généré à partir d'informations temporelles instantanées telle que la date et l'heure.

Avantageusement, l'identifiant unique est en outre généré par l'unité 12 à partir d'un élément aléatoire ou pseudo-aléatoire. En variante, l'élément aléatoire ou pseudo-aléatoire est acquis par l'unité 12, par exemple généré par le terminal 6 puis transmis à l'unité 12.

Dans cet exemple, l'identifiant unique est une chaîne de caractères alphanumériques ou de nombres par exemple hexadécimaux. La longueur de l'identifiant unique est supérieure ou égale à 64 bits, de préférence supérieure ou égale à 128 bits.

Selon un exemple, l'identifiant unique est un identifiant de type « UUID » pour « Universally Unique Identifier» tel que défini par le document « RFC 4122 » de l'organisation « Internet Task Force » ou par la norme ISO/IEC 9834-8. La fonction de génération implémentée par le module 40 est donc adaptée en conséquence.

En théorie, les identifiants générés au moyen de telles fonctions peuvent ne pas être absolument uniques et il existe une probabilité extrêmement faible, généralement inférieure à 10⁻¹², que deux identifiants identiques soient générés par une même fonction. Toutefois, en pratique cette probabilité est tellement faible qu'au sens de la présente description, un tel identifiant peut être considéré comme étant unique.

La table 48 désigne ici de façon générique une structure de données qui réside en mémoire 16, de type liste, ou tableau, ou vecteur, ou base de données, ou un arbre, ou toute autre structure de données appropriée, dans laquelle chaque clé numérique active est associée à un élément qui identifie le terminal client 6 pour lequel la clé correspondante a été générée.

Lorsque plusieurs consignations sont demandées indépendamment par des utilisateurs différents, autant de clés numériques 46 sont générées et sont stockées dans la mémoire 16. La table 48 est mise à jour en conséquence.

Le terminal client 6 comporte :
- une application exécutable 50 qui contient une zone de stockage 52 pour stocker au moins une copie de la clé numérique 46,
- une table 54 contenant des informations d'associations entre la ou les clés numériques stockées dans la zone 52 et un élément d'identification de l'appareil 2 correspondant, et
- une interface homme-machine 56.

Par exemple, le terminal client 6 comprend une unité logique de calcul de type microprocesseur, une mémoire informatique, une interface de communication compatible avec l'interface 18 pour établir une liaison de communication 22 avec l'appareil 2, et comporte également un système d'exploitation par exemple exécuté par l'unité de calcul grâce à des instructions exécutables stockées en mémoire du terminal client 6. Selon des exemples, le terminal client 6 est un ordinateur ou un dispositif de communication mobile tel qu'un téléphone ou une tablette. L'application 50 est exécutée au sein du système d'exploitation.

L'utilisation d'une application 50 installée sur un terminal client 6 permet par exemple de ne pas imposer à l'utilisateur d'avoir recours à un matériel électronique spécifiquement conçu pour utiliser la consignation électronique. Au contraire, l'utilisateur peut installer l'application 50 sur un dispositif de communication mobile déjà existant qu'il est amené à utiliser par ailleurs dans le cadre de ses fonctions. Cela simplifie donc la mise en œuvre du système 8.

Les requêtes de consignation et de libération sont envoyées depuis le terminal client 6, qui doit alors se trouver à proximité de l'appareil 2 pour pouvoir se connecter à ce dernier par la liaison à courte portée 22. Tant que la fonction 10 est consignée, l'utilisateur ayant requis la consignation reste en possession du terminal client 6 qui contient un exemplaire de la clé numérique correspondante. Cette clé n'est pas destinée à être dupliquée par l'utilisateur ni à être copiée sur un autre terminal client. On retrouve ainsi ici un niveau de sécurité au moins équivalent à celui assuré par les systèmes de consignation mécanique connus.

Un même terminal 6 peut être utilisé pour consigner tour à tour plusieurs fonctions 10 sur un ou plusieurs appareils 2 indépendamment les unes des autres.

Avantageusement, l'unité 12 comporte un système de journalisation d'événements configuré pour enregistrer dans un journal d'événements 42, par exemple enregistré au sein d'une mémoire 16, les évènements relatifs à la consignation de la fonction 10. Par exemple, l'unité 12 est configurée pour que, lors de chaque opération effectuée par le module de verrouillage numérique 30 suite à une requête reçue depuis un terminal client 6, l'unité de commande 12 enregistre automatiquement, dans le journal d'événements 42, des informations de suivi de l'opération incluant notamment un identifiant de l'utilisateur qui est à l'origine de la requête, voire aussi la date et l'heure de l'opération ainsi que la nature de l'opération. Cela permet d'assurer une traçabilité de l'utilisation des fonctions de consignation de l'appareil 2.

Selon un mode de mise en œuvre non illustré, l'unité 12 est en outre programmée pour envoyer une notification telle qu'un message d'alerte à destination du ou des terminaux clients identifiés dans le registre 48 en cas de défaillance ou d'anomalie sur la consignation de la fonction 10, par exemple lorsque la consignation ne peut plus être assurée, ou lorsqu'un administrateur impose une levée de la consignation. Les utilisateurs correspondants peuvent être ainsi prévenus immédiatement de la levée de la consignation et peuvent interrompre leur intervention pour éviter tout incident.

Avantageusement, l'unité 12 est également programmée pour envoyer des notifications à destination de l'utilisateur ou, de façon équivalente, au terminal client correspondant, en réponse à une action de l'utilisateur, par exemple pour confirmer qu'une consignation a été mise en place ou pour confirmer que la consignation a été levée.

Selon des modes de mise en œuvre optionnels, l'unité 12 est également programmée pour forcer la levée de consignation de la fonction 10, c'est-à-dire autoriser un utilisateur spécifique à demander la levée de la consignation de la fonction 10 quand bien même cet utilisateur spécifique est différent de l'utilisateur ayant demandé la consignation de la fonction 10 et ne possède pas le terminal 6 ni l'exemplaire 52 de la clé correspondante. Par exemple, l'utilisateur spécifique est un administrateur du système et possède des permissions de sécurité étendues. Par exemple, l'administrateur doit au préalable s'authentifier auprès de l'unité 12. De préférence, lorsque la levée de consignation est forcée, l'unité 12 envoie une notification à destination de l'utilisateur ayant demandé la consignation afin de le prévenir de la levée imminente de la consignation.

Un exemple de fonctionnement de l'appareil 2 et du système 8 est maintenant décrit en référence à l'ordinogramme de la figure 2 pour consigner la fonction 10.

Initialement, un utilisateur envoie une requête en consignation de la fonction 10 depuis le terminal client 6.

Par exemple, l'utilisateur utilise l'interface 56 de l'application 50 pour générer cette requête et l'envoyer à l'appareil 2. La requête peut être précédée d'une phase d'appariement du terminal 6 avec l'appareil 2, par exemple pour établir la liaison 22. Le terminal 6 peut aussi au préalable recevoir des informations envoyées par l'unité 12 indiquant l'état de consignation de la fonction 10, par exemple basé sur l'indicateur d'état 44, pour indiquer si un autre utilisateur a déjà consigné la fonction 10, que ce soit à l'aide du module 30 ou, le cas échéant mécaniquement au moyen de l'interface 32.

La requête est envoyée par l'intermédiaire de la liaison 22 à courte portée, ce qui garantit que l'utilisateur se trouve à proximité de l'appareil 2.

Selon des modes de réalisation, une authentification de l'utilisateur peut être requise, par exemple pour vérifier si l'utilisateur est autorisé à émettre une telle requête. Par exemple, l'application 50 demande à l'utilisateur de fournir des données d'identification, telles qu'un mot de passe personnel prédéfini. L'authentification peut également et/ou de façon complémentaire, selon le contexte et les cas d'utilisation permis, être basée sur des informations d'identification propres à l'utilisateur ou au terminal 6 ou à l'application 50, telle qu'un numéro de série ou une adresse réseau ou une adresse physique telle qu'une adresse MAC ou tout autre identifiant personnalisé. Ces données et/ou informations d'identification sont de préférence connues de l'unité 12, par exemple enregistrées dans un registre de droits d'accès stocké dans la mémoire 16 ou dans le serveur d'authentification 60.

Puis, lors d'une étape 100, l'unité 12 reçoit la requête émise par le terminal client 6.

Le cas échéant, lors d'une étape 102, l'unité 12 vérifie automatiquement les informations d'authentification envoyées par le terminal 6, par exemple à partir du registre de droits d'accès. Cette vérification peut être faite en interrogeant le serveur d'authentification 60, par exemple pour vérifier si les données d'identification reçues correspondent à un utilisateur autorisé à émettre une telle requête.

Si l'authentification échoue, par exemple parce que l'utilisateur n'est pas autorisé à émettre une telle requête, alors lors d'une étape 104 la requête est rejetée sans que la fonction 10 ne soit consignée. Optionnellement, le journal d'événements 42 est mis à jour en conséquence pour consigner la tentative de consignation.

Si l'authentification réussit, ou bien si aucune authentification n'est requise, alors lors d'une étape 106, l'unité 12 génère automatiquement une clé numérique 46 comprenant l'identifiant unique. La clé 46 est ici générée au moyen du générateur de clé 40 comme décrit précédemment.

Puis, lors d'une étape 108, l'unité 12 stocke automatiquement la clé générée dans la mémoire 16. Elle met avantageusement à jour la liste 48 pour associer à cette clé des informations identifiant l'utilisateur ayant émis la requête.

Lors de cette étape 108, l'unité 12 envoie une copie de la clé 46 vers le terminal 6 ayant émis la requête. Avantageusement, l'unité 12 envoie également, associé à cette clé, des informations permettant d'identifier l'appareil 2, telles qu'un numéro de série ou un numéro d'identification prédéfini.

La copie de la clé est reçue par l'application 50 au moyen de la liaison 22. La copie de la clé reçue est stockée dans un espace mémoire 52 du terminal 6 et associée à l'identifiant de l'appareil 2, par exemple un espace mémoire 52 défini par l'application 50. Une fois stockée dans l'espace 52, la copie de la clé n'est pas destinée à être copiée ni transmise à un autre utilisateur.

Par exemple, l'accès à l'espace mémoire 52 est protégé par l'application 50 de manière à interdire tout accès au contenu de cet espace mémoire 52 qui ne serait pas autorisé par l'application 50.

Lors d'une étape 110, l'unité 12 autorise la consignation de la fonction 10. Ici, l'unité 12 active le module de verrouillage 30 pour qu'il consigne la fonction 10. Une fois la consignation activée, le module de verrouillage 30 empêche tout accès inopiné à la fonction 10 par l'intermédiaire de l'unité 12.

Par exemple, dans le cas où le sous-ensemble 10 est un déclencheur paramétré par la courbe de déclenchement précédemment décrite, alors les paramètres de la courbe de déclenchement ne peuvent plus être modifiés de façon inopinée par un autre utilisateur. On comprend toutefois que cela n'empêche pas l'appareil 2 de fonctionner, notamment lors d'un déclenchement, en ce sens que le mécanisme de l'organe de coupure n'est alors pas physiquement bloqué.

Dans l'exemple illustré, l'unité 12 met également à jour l'indicateur d'état 44 pour indiquer que la fonction 10 est consignée.

Optionnellement, le journal d'événements 42 est mis à jour en conséquence lors d'une étape 112 pour enregistrer l'activation de la consignation associée à cet utilisateur.

Une confirmation est enfin envoyée au terminal client 6 lors d'une étape 114 pour indiquer que la consignation a été acceptée.

A ce stade, la fonction 10 ne peut être modifiée ou altérée, ni par l'utilisateur ayant requis la consignation, ni par d'autres utilisateurs.

On comprend donc que la fonction 10 reste consignée par le module de verrouillage 30 tant qu'il existe au moins une clé 46 générée par l'unité 12 qui est stockée dans la mémoire 16 et déclarée dans la table 48. En d'autres termes, une clé numérique 46 est active tant qu'elle est déclarée dans la table 48.

En pratique, d'autres utilisateurs peuvent requérir à leur tour la consignation de la fonction 10, indépendamment les uns des autres, selon un procédé similaire à celui décrit ci-dessus, et en utilisant leur terminal client 6. Une clé correspondante est générée à chaque fois de la même façon que décrit ci-dessus. Ainsi, plusieurs clés différentes 46 peuvent être stockées dans la mémoire 16. Un élément d'identification des utilisateurs associés à chacune de ces clés 46 est stocké dans la table 48. De même, d'autres utilisateurs peuvent avoir requis et obtenu la consignation de la fonction 10 préalablement à l'étape 100 décrite ci-dessus.

Un exemple de fonctionnement de l'appareil 2 et du système 8 est maintenant décrit en référence à l'ordinogramme de la figure 3 pour lever la consignation de la fonction 10, cette consignation ayant été mise en place au moyen du procédé de la figure 2.

Initialement, un utilisateur envoie une requête de levée de consignation de la fonction 10 depuis le terminal client 6. De préférence, il s'agit du même utilisateur que celui ayant requis la consignation et la requête est envoyée depuis le même terminal client que celui ayant précédemment requis la consignation

Par exemple, l'utilisateur utilise l'interface 56 de l'application 50 pour générer cette requête et l'envoyer à l'appareil 2. La requête peut être précédée d'une phase d'appariement du terminal 6 avec l'appareil 2, par exemple pour rétablir la liaison 22 si celle-ci a été interrompue depuis l'étape 100. Le terminal 6 peut aussi au préalable recevoir des informations envoyées par l'unité 12 indiquant l'état de consignation de la fonction 10, par exemple basé sur l'indicateur d'état 44, pour indiquer si d'autres utilisateurs ont entre-temps consigné la fonction 10, que ce soit à l'aide du module 30 ou, le cas échéant mécaniquement au moyen de l'interface 32.

La requête est envoyée par l'intermédiaire de la liaison 22 à courte portée, ce qui garantit que l'utilisateur se trouve à proximité de l'appareil 2.

Lors d'une étape 200, l'unité de commande 12 reçoit la requête en libération. L'unité de commande 12 acquiert un exemplaire de la clé numérique conservée par le terminal client 6 ayant envoyé la requête en libération. Par exemple, cette clé est envoyée par le terminal client 6 avec la requête en libération.

Selon des modes de réalisation, une authentification de l'utilisateur peut être requise, par exemple pour vérifier si l'utilisateur est autorisé à émettre une telle requête. Ainsi, le cas échéant, lors d'une étape 202, l'unité 12 vérifie automatiquement les informations d'authentification envoyées par le terminal 6. Par exemple, l'authentification est réalisée d'une manière analogue à celle décrite en référence à l'étape 100.

Si l'authentification échoue, par exemple parce que l'utilisateur n'est pas autorisé à émettre une telle requête, alors lors d'une étape 204 la requête est rejetée sans que la fonction 10 ne soit libérée. Optionnellement, le journal d'événements 42 est mis à jour en conséquence pour consigner la tentative de libération.

Si l'authentification réussit, ou bien si aucune authentification n'est requise, alors lors d'une étape 206, l'unité 12 compare automatiquement l'exemplaire de la clé numérique acquise avec l'exemplaire de la clé générée stockée 46 dans la mémoire 16. La requête de levée de consignation de la fonction est refusée si la clé acquise ne correspond pas à la clé stockée. Par exemple, l'étape 204 est alors mise en œuvre.

Au contraire, si la clé acquise est déterminée comme correspondant à la clé 46 stockée dans la mémoire 16, alors, lors d'une étape 210, l'unité de commande 12 vérifie automatiquement s'il existe, enregistrée dans l'unité de commande 12, pour cette fonction, au moins une autre clé numérique active associée à un autre terminal client. Par exemple, l'unité 12 recherche s'il existe d'autres clés 46 listées dans la table 48 et associées à d'autres terminaux clients 6 que celui ayant émis la requête.

La levée de consignation de la fonction 10 par le module de verrouillage numérique 30 n'est autorisée que si la comparaison met en évidence qu'il n'existe aucune telle autre clé numérique active associée à cette fonction 10.

Ainsi, si aucune autre clé n'est identifiée comme étant active pour cette fonction 10, alors, lors d'une étape 212, l'unité 12 autorise le module de verrouillage 30 à lever la consignation. Par exemple, l'unité 12 déréférence la clé 46 de la table 48 en supprimant l'entrée correspondante. L'unité 12 détruit également la clé 46 conservée dans la mémoire 16. Avantageusement, lors d'une étape 214, le journal 42 est mis à jour pour enregistrer un suivi de l'opération de levée de consignation de la fonction 10.

Dans le cas contraire, si la comparaison mise en œuvre lors de l'étape 210 révèle qu'il existe au moins une autre clé numérique 46 active pour cette fonction 10, alors la consignation de la fonction 10 par le module de verrouillage numérique 30 est maintenue lors d'une étape 216.

De préférence, bien que cela ne soit pas obligatoire, une alerte est envoyée à destination du terminal client 6 pour informer l'utilisateur à l'origine de la requête que sa requête a été acceptée et que la clé correspondante a été révoquée, mais que la fonction 10 ne peut pas être déverrouillée car il existe d'autres clés actives.

Le cas échéant, l'unité 12 peut envoyer au terminal client des informations sur l'identité du ou des utilisateurs et de leur terminal client 6 qui sont associés aux autres clés actives, en fonction des informations contenues dans le registre 48. Par exemple, ces informations permettent à l'application 50 d'envoyer un message à destination du terminal client 6 de l'utilisateur correspondant. L'envoi de ces informations peut être restreint à seulement certains utilisateurs en fonction des privilèges de sécurité accordés aux autres utilisateurs, par exemple en fonction de politiques de protection des données personnelles.

On comprend donc que la consignation de la fonction 10 ne peut être totalement levée que lorsque toutes les clés 46 associées à cette fonction 10 ont été supprimées par l'unité 12.

Grâce à l'invention, la consignation de la fonction est effectuée de façon dématérialisée à l'aide de la clé 46 et d'un verrouillage logique assuré par l'unité 12, de sorte que l'utilisation de moyens de verrouillage mécaniques n'est donc plus requise. L'appareil 2 peut donc voir ses fonctions 10 consignées avec un niveau de sécurité au moins équivalent à celui traditionnellement assuré par les moyens connus de consignation mécanique.

En outre, la consignation électronique mise en œuvre par l'unité 12 présente des avantages par rapport aux seuls moyens mécaniques de consignation, comme par exemple la traçabilité assurée de façon automatique grâce au journal d'événements 42, ou encore la facilité avec laquelle plusieurs utilisateurs peuvent consigner une même fonction indépendamment les uns des autres. Même dans les cas où des moyens de verrouillage mécanique sont utilisés en conjonction avec l'unité 12, l'utilisation de l'interface 32 décrite ci-dessus associée au système 36 permet à l'unité 12 de disposer d'une information sur l'état du verrouillage mécanique.

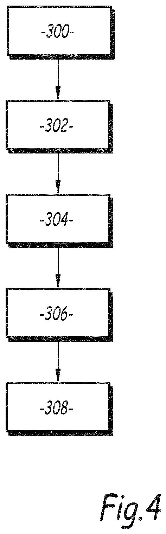

Selon un mode de réalisation optionnel décrit à la figure 4, les étapes décrites ci-dessus pour consigner la fonction 10 peuvent être précédées d'une phase de pré-consignation, aussi dite phase de consignation partielle.

Une telle phase est avantageuse dans certaines applications, par exemple lorsque la fonction 10 doit être placée dans un mode de fonctionnement dégradé, ou dans un mode de maintenance, avant que l'utilisateur ne soit autorisé à approcher de l'appareil 2.

Ainsi, préalablement à l'étape 100 précédemment décrite, l'utilisateur envoie une requête de consignation partielle de la fonction 10, de préférence avec le même terminal client 6 que celui qui sera utilisé lors de l'étape 100.

Lors d'une étape 300, l'unité de commande 12 acquiert la requête en consignation partielle de la fonction 10. De préférence, pour émettre cette requête, le terminal client 6 est connecté à l'unité de commande par une liaison réseau différente de la liaison de communication de courte portée. Par exemple, le terminal 6 est connecté au réseau 24 par la liaison 58. En effet, à ce stade, l'utilisateur n'est pas situé à proximité de l'appareil 2, de sorte que le terminal client 6 ne peut pas communiquer avec l'appareil 2 par l'intermédiaire de la liaison à courte portée 22.

En réponse à cette requête, le module de verrouillage 30 consigne partiellement la fonction 10 lors d'une étape 302, de manière à limiter partiellement l'utilisation de cette fonction 10 par l'unité de commande 12. Une fois que la fonction 10 est partiellement consignée, l'utilisateur peut se rapprocher de l'appareil 2.

Puis, lors d'une étape 304, le terminal 6 envoie une requête de verrouillage de la fonction 10 pour mettre en œuvre l'étape 100 du procédé de la figure 1. Alors, une fois que l'unité 12 autorise le verrouillage de la fonction 10, la consignation partielle est levée lors d'une étape 306 avant d'être remplacée par la consignation de la fonction 10 lors d'une étape 308 analogue à l'étape 110.

## Revendications

1. Procédé de consignation d'une fonction (10) d'un appareil électrique (2), l'appareil électrique étant un appareil de protection électrique ou un appareil de mesure électrique ou un appareil de commutation électrique, **caractérisé en ce que** le procédé comporte :
a) la réception (100), par une unité de commande (12) électronique de l'appareil électrique (2), d'une requête en consignation d'une fonction (10) implémentée par un sous-ensemble de l'appareil électrique, la requête étant émise par un terminal client (6) connecté à l'unité de commande par une liaison de communication (22) de courte portée ;
b) la génération automatique (106), par l'unité de commande, d'une clé numérique (46) comprenant un identifiant unique ;
c) le stockage (108) d'un exemplaire de la clé générée (46) dans une mémoire (16) de l'unité de commande (16) et l'envoi (108) d'un autre exemplaire (52) de la clé générée au terminal client (6) ayant émis la requête ;
d) la consignation (110) de la fonction (10), par un module de verrouillage (30) numérique de l'unité de commande, de manière à empêcher l'utilisation de cette fonction (10) de l'appareil par l'unité de commande tant que la consignation est active,
et **en ce que** le procédé comporte en outre la levée de consignation de la fonction (10) préalablement consignée au moyen des étapes a) à d), ce procédé comprenant :
a') la réception (200), par l'unité de commande électronique (12) de l'appareil électrique (2), d'une requête de levée de consignation de la fonction (10) préalablement consignée, la requête en libération étant émise par le même terminal client (6), ce terminal client (6) étant connecté à l'unité de commande (12) par une liaison de communication (22) de courte portée ;
b') en réponse, l'acquisition, par l'unité de commande (12), d'un exemplaire de la clé numérique (52) conservée par le terminal client ayant envoyé la requête en libération ;
c') la comparaison (206) de l'exemplaire de la clé numérique acquise (52) avec l'exemplaire de la clé générée stockée (46) dans la mémoire (16), la requête de levée de consignation de la fonction étant refusée si la clé acquise (52) ne correspond pas à la clé stockée (46) ;
d') la vérification automatique, par l'unité de commande (12), de l'existence, enregistrée dans l'unité de commande, pour cette fonction, d'au moins une autre clé numérique associée à un autre terminal client, cette vérification étant mise en œuvre seulement si la clé acquise (52) est déterminée comme correspondant à la clé stockée (46) dans la mémoire (16),
- la levée de consignation de la fonction (10) par le module de verrouillage numérique (30) étant autorisée (212) uniquement s'il n'existe aucune telle autre clé numérique,
- la consignation de la fonction (10) par le module de verrouillage numérique (30) étant maintenue (216) s'il existe au moins une telle autre clé numérique.

2. Procédé de consignation d'une fonction (10) d'un appareil électrique (2), l'appareil électrique étant un appareil de protection électrique ou un appareil de mesure électrique ou un appareil de commutation électrique, **caractérisé en ce que** le procédé comporte :
a) la réception (100), par une unité de commande (12) électronique de l'appareil électrique (2), d'une requête en consignation d'une fonction (10) implémentée par un sous-ensemble de l'appareil électrique, la requête étant émise par un terminal client (6) connecté à l'unité de commande par une liaison de communication (22) de courte portée;
b) la génération automatique (106), par l'unité de commande, d'une clé numérique (46) comprenant un identifiant unique si le terminal client (6) est préalablement authentifié (102) comme étant autorisé à requérir la consignation de la fonction,
c) le stockage (108) d'un exemplaire de la clé générée (a6) dans une mémoire (16) de l'unité de commande (16) et l'envoi (108) d'un autre exemplaire (52) de la clé générée au terminal client (6) ayant émis la requête si le terminal client (6) est préalablement authentifié (102) comme étant autorisé à requérir la consignation de la fonction:
d) la consignation (110) de la fonction (10), par un module de verrouillage (30) numérique de l'unité de commande, de manière à empêcher l'utilisation de cette fonction (10) de l'appareil par l'unité de commande tant que la consignation est active si le terminal client (6) est préalablement authentifié (102) comme étant autorisé à requérir la consignation de la fonction,
et **en ce que** le procédé comporte en outre la levée de consignation de la fonction (10) préalablement consignée au moyen des étapes a) à d), ce procédé comprenant :
a') la réception (200), par l'unité de commande électronique (12) de l'appareil électrique (2), d'une requête de levée de consignation de la fonction (10) préalablement consignée, la requête en libération étant émise par le même termina! client (6), ce terminal client (6) étant connecté à l'unité de commande (12) par une liaison de communication (22) de courte portée ;
b') en réponse, l'acquisition, par l'unité de commande ('12), d'un exemplaire de la clé numérique (52) conservée par !e terminal client ayant envoyé !a requête en libération ;
c') la comparaison (206) de l'exemplaire de la clé numérique acquise (52) avec l'exemplaire de la clé générée stockée (46) dans la mémoire (16), la requête de levée de consignation de la fonction étant refusée si la clé acquise (52) ne correspond pas à la clé stockée (46) ;
d') la vérification automatique, par l'unité de commande (12), de l'existence, enregistrée dans l'unité de commande, pour cette fonction, d'au moins une autre clé numérique associée à un autre terminal client, cette vérification étant mise en œuvre seulement si la clé acquise (52) est déterminée comme correspondant à la clé stockée (46) dans la mémoire (16),
- la levée de consignation de la fonction (10) par le module de verrouillage numérique (30) étant autorisée (212) uniquement s'il n'existe aucune telle autre clé numérique,
- la consignation de la fonction (10) par le module de verrouillage numérique (30) étant maintenue (216) s'il existe au moins une telle autre clé numérique.

3. Procédé selon la revendication 1 ou la revendication 2, dans lequel l'appareil électrique (2) comporte une interface de verrouillage mécanique (32) destinée à recevoir un organe de verrouillage mécanique (34) pour consigner mécaniquement la fonction (10) de l'appareil électrique indépendamment du module de verrouillage (30) numérique de l'unité de commande (12), et dans lequel, lors de l'étape d'), si la levée de consignation de la fonction par le module de verrouillage numérique (30) est autorisée, l'unité de commande (12) détermine l'état de l'interface de verrouillage mécanique (32) et, si l'interface de verrouillage mécanique (32) est déterminée comme étant dans l'état verrouillé, l'unité de commande (12) envoie une notification au terminal client (6).

4. Procédé selon la revendication 2 ou la revendication 3, dans lequel l'authentification (102) du terminal client (6) est assurée au moyen d'un serveur d'authentification (60) distant connecté à l'unité de commande électronique (12) par l'intermédiaire d'une liaison de communication (24) différente de la liaison de communication (22) de courte portée.

5. Procédé selon l'une quelconque des revendications précédentes, dans lequel la liaison de données (22) à courte portée est une liaison filaire ou une liaison sans fil point à point dont la portée est inférieure ou égale à cinq mètres.

6. Procédé selon l'une quelconque des revendications précédentes, dans lequel, lors de chaque opération effectuée par le module de verrouillage numérique (30) suite à une requête reçue depuis un terminal client (6), l'unité de commande (12) enregistre automatiquement, dans un journal d'événements (42) stocké en mémoire (16), des informations de suivi de l'opération incluant notamment un identifiant de l'utilisateur qui est à l'origine de la requête.

7. Procédé selon l'une quelconque des revendications précédentes, dans lequel l'identifiant unique est généré (106) en fonction d'un élément aléatoire ou pseudo-aléatoire.

8. Procédé selon l'une quelconque des revendications précédentes, dans lequel préalablement à l'étape a) :
- l'unité de commande (12) acquiert (300) une requête en consignation partielle de la fonction (10), la requête étant émise par un terminal client (6) connecté à l'unité de commande par une liaison réseau (24) différente de la liaison de communication de courte portée ;
- en réponse, le module de verrouillage (30) numérique de l'unité de commande consigne partiellement (302) la fonction (10), de manière à limiter partiellement l'utilisation de cette fonction (10) de l'appareil par l'unité de commande, la consignation partielle étant levée (306) lors de l'étape d) et remplacée (308) par la consignation de la fonction.

9. Appareil électrique (2), l'appareil électrique étant un appareil de protection électrique ou un appareil de mesure électrique ou un appareil de commutation électrique ou un appareil de supervision ou de communication, comportant un sous-ensemble apte à implémenter une fonction (10) et une unité de commande électronique (12) programmée pour :
a) recevoir (100) une requête en consignation de la fonction (10) implémentée par le sous-ensemble (10), la requête étant émise par un terminal client (6) connecté à l'unité de commande par une liaison de communication (22) de courte portée ;
b) générer automatiquement (106) une clé numérique (46) comprenant un identifiant unique ;
c) stocker (108) un exemplaire de la clé générée (46) dans une mémoire (16) de l'unité de commande (16) et envoyer (108) un autre exemplaire (52) de la clé générée au terminal client (6) ayant émis la requête ;
d) consigner (110) la fonction (10), par un module de verrouillage (30) numérique de l'unité de commande, de manière à empêcher l'utilisation de cette fonction (10) de l'appareil par l'unité de commande tant que la consignation est active,
l'unité de commande électronique (12) étant en outre programmée pour mettre en œuvre un procédé de levée de consignation de la fonction (10) préalablement consignée au moyen des caractéristiques a) à d), ce procédé comprenant :
a') la réception (200), par l'unité de commande électronique (12) de l'appareil électrique (2), d'une requête de levée de consignation de la fonction (10) préalablement consignée, la requête en libération étant émise par le même terminal client (6), ce terminal client (6) étant connecté à l'unité de commande (12) par une liaison de communication (22) de courte portée ;
b') en réponse, l'acquisition, par l'unité de commande (12), d'un exemplaire de la clé numérique (52) conservée par le terminal client ayant envoyé la requête en libération ;
c') la comparaison (206) de l'exemplaire de la clé numérique acquise (52) avec l'exemplaire de la clé générée stockée (46) dans la mémoire (16), la requête de levée de consignation de la fonction étant refusée si la clé acquise (52) ne correspond pas à la clé stockée (46) ;
d') la vérification automatique, par l'unité de commande (12), de l'existence, enregistrée dans l'unité de commande, pour cette fonction, d'au moins une autre clé numérique associée à un autre terminal client, cette vérification étant mise en œuvre seulement si la clé acquise (52) est déterminée comme correspondant à la clé stockée (46) dans la mémoire (16),
- la levée de consignation de la fonction (10) par le module de verrouillage numérique (30) étant autorisée (212) uniquement s'il n'existe aucune telle autre clé numérique,
- la consignation de la fonction (10) par le module de verrouillage numérique (30) étant maintenue (216) s'il existe au moins une telle autre clé numérique.

## Patentansprüche

1. Verfahren zum Verriegeln einer Funktion (10) eines elektrischen Geräts (2), wobei das elektrische Gerät ein elektrisches Schutzgerät oder ein elektrisches Messgerät oder ein elektrisches Schaltgerät ist, **dadurch gekennzeichnet, dass** das Verfahren umfasst:
a) Empfangen (100), durch eine elektronische Steuereinheit (12) des elektrischen Geräts (2), einer Anfrage, eine Funktion (10) zu verriegeln, die durch eine Unterbaugruppe des elektrischen Geräts implementiert ist, wobei die Anfrage von einem Client-Endgerät (6) gesendet wird, das mit der Steuereinheit über eine Kommunikationsverbindung (22) kurzer Reichweite verbunden ist;
b) automatisches Erzeugen (106) eines digitalen Schlüssels (46), der eine eindeutige Kennung enthält, durch die Steuereinheit;
c) Speichern (108) einer Kopie des erzeugten Schlüssels (46) in einem Speicher (16) der Steuereinheit (16) und Senden (108) einer weiteren Kopie (52) des erzeugten Schlüssels an das Client-Endgerät (6), das die Anfrage gesendet hat;
d) Verriegeln (110) der Funktion (10) durch ein digitales Verriegelungsmodul (30) der Steuereinheit, so dass die Verwendung dieser Funktion (10) des Geräts durch die Steuereinheit verhindert wird, solange die Verriegelung aktiv ist,
und dass das Verfahren außerdem die Aufhebung der zuvor mittels der Schritte a) bis d) verriegelten Funktion (10) aufweist, wobei das Verfahren umfasst:
a') Empfangen (200) einer Anfrage zur Aufhebung der zuvor verriegelten Funktion (10) durch die elektronische Steuereinheit (12) des elektrischen Geräts (2), wobei die Anfrage zur Freigabe von demselben Client-Endgerät (6) gesendet wird, wobei dieses Client-Endgerät (6) mit der Steuereinheit (12) über eine Kommunikationsverbindung (22) kurzer Reichweite verbunden ist;
b') in Antwort darauf Beschaffen einer Kopie des digitalen Schlüssels (52) durch die Steuereinheit (12), der von dem Client-Endgerät, das die Anfrage zur Freigabe gesendet hat, bewahrt wurde;
c') Vergleichen (206) der Kopie des beschafften digitalen Schlüssels (52) mit der im Speicher (16) gespeicherten Kopie des erzeugten Schlüssels (46), wobei die Anfrage zur Aufhebung der Verriegelung der Funktion abgelehnt wird, wenn der beschaffte Schlüssel (52) nicht mit dem gespeicherten Schlüssel (46) übereinstimmt;
d') automatisches Überprüfen durch die Steuereinheit (12) des Vorhandenseins, das in der Steuereinheit für diese Funktion gespeichert ist, mindestens eines anderen digitalen Schlüssels, der einem anderen Client-Endgerät zugeordnet ist, wobei diese Überprüfung nur durchgeführt wird, wenn der erfasste Schlüssel (52) als dem im Speicher (16) gespeicherten Schlüssel (46) entsprechend ermittelt wird,
- wobei das Aufheben der Verriegelung der Funktion (10) durch das digitale Verriegelungsmodul (30) nur dann erlaubt ist (212), wenn kein solcher anderer digitaler Schlüssel existiert,
- und die Verrieglung der Funktion (10) durch das digitale Verriegelungsmodul (30) beibehalten wird (216), wenn mindestens ein weiterer solcher digitaler Schlüssel vorhanden ist.

2. Verfahren zum Verriegeln einer Funktion (10) eines elektrischen Geräts (2), wobei das elektrische Gerät ein elektrisches Schutzgerät oder ein elektrisches Messgerät oder ein elektrisches Schaltgerät ist, **dadurch gekennzeichnet, dass** das Verfahren umfasst:
a) Empfangen (100), durch eine elektronische Steuereinheit (12) des elektrischen Geräts (2), einer Anfrage, eine Funktion (10) zu verriegeln, die durch eine Unterbaugruppe des elektrischen Geräts implementiert ist, wobei die Anfrage von einem Client-Endgerät (6) übertragen wird, das mit der Steuereinheit über eine Kommunikationsverbindung (22) kurzer Reichweite verbunden ist;
b) automatisches Erzeugen (106) eines digitalen Schlüssels (46) durch die Steuereinheit, der eine eindeutige Kennung enthält, wenn das Client-Endgerät (6) zuvor als dazu autorisiert identifiziert wurde (102), die Verriegelung der Funktion zu verlangen,
c) Speichern (108) einer Kopie des erzeugten Schlüssels (a6) in einem Speicher (16) der Steuereinheit (16) und Senden (108) einer weiteren Kopie (52) des erzeugten Schlüssels an das Client-Endgerät (6), das die Anfrage gesendet hat, wenn das Client-Endgerät (6) zuvor als dazu autorisiert identifiziert wurde (102), die Verriegelung der Funktion zu verlangen:
d) Verriegeln (110) der Funktion (10) durch ein digitales Verriegelungsmodul (30) der Steuereinheit, so dass die Verwendung dieser Funktion (10) des Geräts durch die Steuereinheit verhindert wird, solange die Verriegelung aktiv ist, wenn das Client-Endgerät (6) zuvor als dazu autorisiert identifiziert wurde (102), die Verriegelung der Funktion zu verlangen,
und dass das Verfahren außerdem die Aufhebung der zuvor mittels der Schritte a) bis d) verriegelten Funktion (10) aufweist, wobei das Verfahren umfasst:
a') Empfangen (200) einer Anfrage zur Aufhebung der zuvor verriegelten Funktion (10) durch die elektronische Steuereinheit (12) des elektrischen Geräts (2), wobei die Anfrage zur Freigabe von demselben Client-Endgerät (6) gesendet wird, wobei dieses Client-Endgerät (6) mit der Steuereinheit (12) über eine Kommunikationsverbindung (22) kurzer Reichweite verbunden ist;
b') in Antwort darauf Beschaffen einer Kopie des digitalen Schlüssels (52) durch die Steuereinheit ('12), der von dem Client-Endgerät, das die Anfrage zur Freigabe gesendet hat, bewahrt wurde;
c') Vergleichen (206) der Kopie des beschafften digitalen Schlüssels (52) mit der im Speicher (16) gespeicherten Kopie des erzeugten Schlüssels (46), wobei die Anfrage zur Aufhebung der Verriegelung der Funktion abgelehnt wird, wenn der beschaffte Schlüssel (52) nicht mit dem gespeicherten Schlüssel (46) übereinstimmt;
d') automatisches Überprüfen durch die Steuereinheit (12) des Vorhandenseins, das in der Steuereinheit für diese Funktion gespeichert ist, mindestens eines anderen digitalen Schlüssels, der einem anderen Client-Endgerät zugeordnet ist, wobei diese Überprüfung nur durchgeführt wird, wenn der erfasste Schlüssel (52) als dem im Speicher (16) gespeicherten Schlüssel (46) entsprechend ermittelt wird,
- wobei das Aufheben der Verriegelung der Funktion (10) durch das digitale Verriegelungsmodul (30) nur dann erlaubt ist (212), wenn kein solcher anderer digitaler Schlüssel existiert,
- und die Verrieglung der Funktion (10) durch das digitale Verriegelungsmodul (30) beibehalten wird (216), wenn mindestens ein weiterer solcher digitaler Schlüssel vorhanden ist.

3. Verfahren nach Anspruch 1 oder Anspruch 2, bei dem das elektrische Gerät (2) eine mechanische Übergangsstelle (32) zur mechanischen Verriegelung aufweist, die vorgesehen ist, ein mechanisches Verriegelungselement (34) zur mechanischen Verriegelung der Funktion (10) des elektrischen Geräts unabhängig vom digitalen Verriegelungsmodul (30) der Steuereinheit (12) aufzunehmen, und bei dem die Steuereinheit (12) im Schritt d'), wenn die Aufhebung der Verriegelung der Funktion von dem digitalen Verriegelungsmodul (30) autorisiert wird, den Zustand der Übergangsstelle (32) zur mechanischen Verriegelung ermittelt, und wenn die Übergangsstelle (32) zur mechanischen Verriegelung als sich im verriegelten Zustand befindend ermittelt wird, die Steuereinheit (12) eine Benachrichtigung an das Client-Endgerät (6) sendet.

4. Verfahren nach Anspruch 2 oder Anspruch 3, bei dem die Authentifizierung (102) des Client-Endgeräts (6) mittels eines entfernt liegenden Authentifizierungsservers (60) sichergestellt wird, der mit der elektronischen Steuereinheit (12) über eine Kommunikationsverbindung (24) verbunden ist, die sich von der Kommunikationsverbindung (22) kurzer Reichweite unterscheidet.

5. Verfahren nach einem beliebigen der vorhergehenden Ansprüche, bei dem die Datenverbindung (22) kurzer Reichweite eine drahtgebundene Verbindung oder eine drahtlose Punkt-zu-Punkt-Verbindung ist, deren Reichweite geringer als oder gleich fünf Meter ist.

6. Verfahren nach einem beliebigen der vorhergehenden Ansprüche, bei dem die Steuereinheit (12) bei jedem Vorgang, der von dem digitalen Verriegelungsmodul (30) aufgrund einer von einem Client-Endgerät (6) empfangenen Anfrage ausgeführt wird, automatisch in einem in einem Speicher (16) gespeicherten Ereignisprotokoll (42) Informationen zum Verfolgen des Vorgangs aufzeichnet, die insbesondere eine Kennung des Benutzers, der die Anforderung ausgelöst hat, aufzeichnet.

7. Verfahren nach einem beliebigen der vorhergehenden Ansprüche, bei dem die eindeutige Kennung abhängig von einem zufälligen oder pseudozufälligen Elements erzeugt wird (106).

8. Verfahren nach einem beliebigen der vorhergehenden Ansprüche, bei dem vor dem Schritt a):
- die Steuereinheit (12) eine Anfrage zur teilweisen Verriegelung der eine Funktion (10) beschafft (300), wobei die Anfrage von einem Client-Endgerät (6) gesendet wird, das mit der Steuereinheit über eine Netzverbindung (24) unterschiedlich zur Kommunikationsverbindung kurzer Reichweite verbunden ist;
- in Antwort das digitale Verriegelungsmodul (30) der Steuereinheit die Funktion (10) teilweise verriegelt (302), so dass die Verwendung dieser Funktion (10) des Geräts teilweise durch die Steuereinheit eingeschränkt wird, wobei die teilweise Verriegelung beim Schritt d) aufgehoben wird (306) und durch die Verriegelung ersetzt wird (308).

9. Elektrisches Gerät (2), wobei das elektrische Gerät ein elektrisches Schutzgerät oder ein elektrisches Messgerät oder ein elektrisches Schaltgerät oder ein Überwachungs- oder Kommunikationsgerät ist, das eine Unterbaugruppe, die eine Funktion (10) implementieren kann, und eine elektronischen Steuereinheit (12) aufweist, die programmiert ist, um:
a) eine Anfrage zur teilweisen Verriegelung der von der Unterbaugruppe (10) implementierten Funktion (10) zu empfangen (100), wobei die Anfrage von einem Client-Endgerät (6) gesendet wird, das mit der Steuereinheit über eine Kommunikationsverbindung (22) kurzer Reichweite verbunden ist;
b) einen digitalen Schlüssel (46), der eine eindeutige Kennung enthält, automatisch zu erzeugen (106);
c) eine Kopie des erzeugten Schlüssels (46) in einem Speicher (16) der Steuereinheit (16) zu speichern (108) und eine weitere Kopie (52) des erzeugten Schlüssels an das Client-Endgerät (6), das die Anfrage gesendet hat, zu übermitteln (108);
d) die Funktion (10) durch ein digitales Verriegelungsmodul (30) der Steuereinheit zu verriegeln (110), so dass die Verwendung dieser Funktion (10) des Geräts durch die Steuereinheit verhindert wird, solange die Verriegelung aktiv ist,
wobei die elektronische Steuereinheit (12) ferner programmiert ist, ein Verfahren zum Aufheben der Verriegelung der zuvor mittels der Merkmale a) bis d) gesperrten Funktion (10) durchzuführen, wobei dieses Verfahren umfasst:
a') Empfangen (200) einer Anfrage zur Aufhebung der zuvor verriegelten Funktion (10) durch die elektronische Steuereinheit (12) des elektrischen Geräts (2), wobei die Anfrage zur Freigabe von demselben Client-Endgerät (6) gesendet wird, wobei dieses Client-Endgerät (6) mit der Steuereinheit (12) über eine Kommunikationsverbindung (22) kurzer Reichweite verbunden ist;
b') in Antwort darauf Beschaffen einer Kopie des digitalen Schlüssels (52) durch die Steuereinheit (12), der von dem Client-Endgerät, das die Anfrage zur Freigabe gesendet hat, bewahrt wurde;
c') Vergleichen (206) der Kopie des beschafften digitalen Schlüssels (52) mit der im Speicher (16) gespeicherten Kopie des erzeugten Schlüssels (46), wobei die Anfrage zur Aufhebung der Verriegelung der Funktion abgelehnt wird, wenn der beschaffte Schlüssel (52) nicht mit dem gespeicherten Schlüssel (46) übereinstimmt;
d') automatisches Überprüfen durch die Steuereinheit (12) des Vorhandenseins, das in der Steuereinheit für diese Funktion gespeichert ist, mindestens eines anderen digitalen Schlüssels, der einem anderen Client-Endgerät zugeordnet ist, wobei diese Überprüfung nur durchgeführt wird, wenn der erfasste Schlüssel (52) als dem im Speicher (16) gespeicherten Schlüssel (46) entsprechend ermittelt wird,
- wobei das Aufheben der Verriegelung der Funktion (10) durch das digitale Verriegelungsmodul (30) nur dann erlaubt ist (212), wenn kein solcher anderer digitaler Schlüssel existiert,
- und die Verrieglung der Funktion (10) durch das digitale Verriegelungsmodul (30) beibehalten wird (216), wenn mindestens ein weiterer solcher digitaler Schlüssel vorhanden ist.

## Claims

1. Method for isolating a function (10) of an electrical apparatus (2), the electrical apparatus being an electrical protection apparatus or an electrical measuring apparatus or an electrical switching apparatus, **characterised in that** the method comprises:
a) receiving (100), by an electronic control unit (12) of the electrical apparatus (2), a request for isolation of a function (10) implemented by a sub-assembly of the electrical apparatus, the request being transmitted by a client terminal (6) connected to the control unit by a short-range communication link (22);
b) automatically generating (106), by the control unit, a digital key (46) comprising a unique identifier;
c) storing (108) a copy of the generated key (46) in a memory (16) of the control unit (16) and sending (108) another copy (52) of the generated key to the client terminal (6) that transmitted the request;
d) isolating (110) the function (10), by a digital locking module (30) of the control unit, so as to prevent that function (10) of the apparatus from being used by the control unit as long as the isolation is active,
and **in that** the method further comprises lifting the isolation of the function (10) previously isolated by means of steps a) to d), this method comprising:
a') receiving (200), by the electronic control unit (12) of the electrical apparatus (2), a request for lifting of the isolation of the previously isolated function (10), the request for release being transmitted by the same client terminal (6), that client terminal (6) being connected to the control unit (12) by a short-range communication link (22);
b') in response, acquiring, by the control unit (12), a copy of the digital key (52) stored by the client terminal that sent the request for release;
c') comparing (206) the copy of the acquired digital key (52) with the copy of the stored generated key (46) in the memory (16), the request for lifting of the isolation of the function being refused if the acquired key (52) does not correspond to the stored key (46);
d') automatically verifying, by the control unit (12), the existence, recorded in the control unit, for that function, of at least one other digital key associated with another client terminal, this verification being carried out only if the acquired key (52) is determined as corresponding to the stored key (46) in the memory (16),
- lifting of the isolation of the function (10) by the digital locking module (30) being authorised (212) only if there is no such other digital key,
- isolation of the function (10) by the digital locking module (30) being maintained (216) if there is at least one such other digital key.

2. Method for isolating a function (10) of an electrical apparatus (2), the electrical apparatus being an electrical protection apparatus or an electrical measuring apparatus or an electrical switching apparatus, **characterised in that** the method comprises:
a) receiving (100), by an electronic control unit (12) of the electrical apparatus (2), a request for isolation of a function (10) implemented by a sub-assembly of the electrical apparatus, the request being transmitted by a client terminal (6) connected to the control unit by a short-range communication link (22);
b) automatically generating (106), by the control unit, a digital key (46) comprising a unique identifier if the client terminal (6) is previously authenticated (102) as being authorised to request isolation of the function;
c) storing (108) a copy of the generated key (46) in a memory (16) of the control unit (16) and sending (108) another copy (52) of the generated key to the client terminal (6) that transmitted the request if the client terminal (6) is previously authenticated (102) as being authorised to request isolation of the function;
d) isolating (110) the function (10), by a digital locking module (30) of the control unit, so as to prevent that function (10) of the apparatus from being used by the control unit as long as the isolation is active if the client terminal (6) is previously authenticated (102) as being authorised to request isolation of the function,
and **in that** the method further comprises lifting the isolation of the function (10) previously isolated by means of steps a) to d), this method comprising:
a') receiving (200), by the electronic control unit (12) of the electrical apparatus (2), a request for lifting of the isolation of the previously isolated function (10), the request for release being transmitted by the same client terminal (6), that client terminal (6) being connected to the control unit (12) by a short-range communication link (22);
b') in response, acquiring, by the control unit (12), a copy of the digital key (52) stored by the client terminal that sent the request for release;
c') comparing (206) the copy of the acquired digital key (52) with the copy of the stored generated key (46) in the memory (16), the request for lifting of the isolation of the function being refused if the acquired key (52) does not correspond to the stored key (46);
d') automatically verifying, by the control unit (12), the existence, recorded in the control unit, for that function, of at least one other digital key associated with another client terminal, this verification being carried out only if the acquired key (52) is determined as corresponding to the stored key (46) in the memory (16),
- lifting of the isolation of the function (10) by the digital locking module (30) being authorised (212) only if there is no such other digital key,
- isolation of the function (10) by the digital locking module (30) being maintained (216) if there is at least one such other digital key.

3. Method according to claim 1 or claim 2, wherein the electrical apparatus (2) comprises a mechanical locking interface (32) which is to receive a mechanical locking member (34) for mechanically isolating the function (10) of the electrical apparatus independently of the digital locking module (30) of the control unit (12), and wherein, in step d'), if the lifting of the isolation of the function by the digital locking module (30) is authorised, the control unit (12) determines the state of the mechanical locking interface (32) and, if the mechanical locking interface (32) is determined as being in the locked state, the control unit (12) sends a notification to the client terminal (6).

4. Method according to claim 2 or claim 3, wherein authentication (102) of the client terminal (6) is effected by means of a remote authentication server (60) which is connected to the electronic control unit (12) by way of a communication link (24) that is different from the short-range communication link (22).

5. Method according to any one of the preceding claims, wherein the short-range data link (22) is a wired link or a point-to-point wireless link, the range of which is less than or equal to five metres.

6. Method according to any one of the preceding claims, wherein, during each operation performed by the digital locking module (30) following a request received from a client terminal (6), the control unit (12) automatically records, in an event log (42) stored in the memory (16), monitoring information of the operation, including especially an identifier of the user who originated the request.

7. Method according to any one of the preceding claims, wherein the unique identifier is generated (106) as a function of a random or pseudo-random element.

8. Method according to any one of the preceding claims, wherein, prior to step a):
- the control unit (12) acquires (300) a request for partial isolation of the function (10), the request being transmitted by a client terminal (6) connected to the control unit by a network link (24) that is different from the short-range communication link;
- in response, the digital locking module (30) of the control unit partially isolates (302) the function (10) so as to partially limit the use of that function (10) of the apparatus by the control unit, the partial isolation being lifted (306) in step d) and replaced (308) by isolation of the function.

9. Electrical apparatus (2), the electrical apparatus being an electrical protection apparatus or an electrical measuring apparatus or an electrical switching apparatus or a supervision or communication apparatus, comprising a sub-assembly capable of implementing a function (10) and an electronic control unit (12) programmed to:
a) receive (100) a request for isolation of the function (10) implemented by the sub-assembly (10), the request being transmitted by a client terminal (6) connected to the control unit by a short-range communication link (22);
b) automatically generate (106) a digital key (46) comprising a unique identifier;
c) store (108) a copy of the generated key (46) in a memory (16) of the control unit (16) and send (108) another copy (52) of the generated key to the client terminal (6) that transmitted the request;
d) isolate (110) the function (10), by a digital locking module (30) of the control unit, so as to prevent that function (10) of the apparatus from being used by the control unit as long as the isolation is active,
the electronic control unit (12) further being programmed to carry out a method for lifting the isolation of the function (10) previously isolated by means of features a) to d), this method comprising:
a') receiving (200), by the electronic control unit (12) of the electrical apparatus (2), a request for lifting of the isolation of the previously isolated function (10), the request for release being transmitted by the same client terminal (6), that client terminal (6) being connected to the control unit (12) by a short-range communication link (22);
b') in response, acquiring, by the control unit (12), a copy of the digital key (52) stored by the client terminal that sent the request for release;
c') comparing (206) the copy of the acquired digital key (52) with the copy of the stored generated key (46) in the memory (16), the request for lifting of the isolation of the function being refused if the acquired key (52) does not correspond to the stored key (46);
d') automatically verifying, by the control unit (12), the existence, recorded in the control unit, for that function, of at least one other digital key associated with another client terminal, this verification being carried out only if the acquired key (52) is determined as corresponding to the stored key (46) in the memory (16),
- lifting of the isolation of the function (10) by the digital locking module (30) being authorised (212) only if there is no such other digital key,
- isolation of the function (10) by the digital locking module (30) being maintained (216) if there is at least one such other digital key.
